# EUROPÄISCHE PATENTSCHRIFT

(11) **EP 3 047 948 B1**
(45) Veröffentlichungstag und Bekanntmachung des Hinweises auf die Patenterteilung: **04.03.2020**
(21) Anmeldenummer: 15151796.8
(22) Anmeldetag: 20.01.2015
(51) Int. Cl.: B29C 33/38, B29C 33/56, B29C 33/42, B29C 41/02, B60R 13/02

(54) **Belederungsmodell**
Leather trim model
Modèle de revêtement avec du cuir

(43) Veröffentlichungstag der Anmeldung: 27.07.2016
(73) Patentinhaber: SMP Deutschland GmbH, 79268 Bötzingen (DE)
(72) Erfinder: Buchet, Yann, 67000 Strasbourg (FR)
(74) Vertreter: Westphal, Mussgnug & Partner Patentanwälte mbB

(56) Entgegenhaltungen:
- FR-A- 1 418 114
- US-A- 4 863 663

## Beschreibung

Die Erfindung betrifft ein Belederungsmodell gemäß dem Oberbegriff des Patentanspruchs 1.

Belederungsmodelle werden zur Herstellung von Formhäuten, insbesondere für Innenverkleidungen und Armaturentafeln von Kraftfahrzeugen, verwendet. Dabei wird von dem Belederungsmodell ein Silikonabdruck hergestellt, aus dem eine Galvanoform gefertigt wird. Mittels eines Formverfahrens, beispielsweise eines Slush-, Sprüh- oder Tiefziehprozesses, wird aus der Galvanoform eine Formhaut hergestellt.

Aus der DE 101 02 600 B4 ist ein Verfahren zur Herstellung von Formhäuten für Fahrzeuginnenverkleidungen bekannt. Dort ist ein Belederungsmodell offenbart, das der Herstellung einer sichtbaren, genarbten Seite eines Silikonnegativs dient. Auf das Belederungsmodell ist eine genarbte Haut ohne Ausbildung einer Naht aufgebracht.

Um den Eindruck von natürlichem Leder hervorzurufen, werden die auf ein Belederungsmodell aufzubringenden Häute häufig aus mit einer Naht verbundenen Zuschnitten gefertigt.

Bei derartigen Belederungsmodellen stellt sich das Problem, dass beim Gießen eines Silikonabdruckes Silikon an möglichen Durchtrittsstellen an der Naht austreten kann. Durch einen Silikonaustritt ist eine zu erreichende saubere Entformung des Silikonabdruckes mit definierter Kontur nicht sichergestellt.

Um einen Silikonaustritt zu vermeiden, werden nach bekannten Verfahren mögliche Durchtrittstellen mit einer Spachtelmasse abgedichtet. Jedoch geht durch die Spachtelung der Echtheitseindruck der Naht verloren.

Darüber hinaus besteht bei genähten Häuten das Problem, dass an dem Durchstichstellen der verwendeten Fäden zusätzliche Durchtrittsstellen für Silikon entstehen.

Formwerkzeuge, mit welchem Verkleidungsbauteile für Fahrzeuge geformt werden können, sind aus der DE 10 2010 053 149 A1 und der EP 1 378 339 A1 bekannt.

Aus der FR 1 418 114 A ist es bekannt, eine Armlehne für einen Fahrzeugsitz herzustellen, bei dem eine lederähnliche Struktur als Formhaut mittels eines Silikonabdrucks in einer Form hergestellt wird.

Aus der US 4,863,663 A ist es schließlich bekannt, ein Prototypenteil zu fertigen, bei dem auf eine Trägerstruktur schichtweise faserverstärkte Matten aufgebracht werden.

Die Aufgabe der vorliegenden Erfindung besteht daher darin, ein gattungsgemäßes Belederungsmodell bereitzustellen, bei dem die geschilderten Nachteile, insbesondere bei der Fertigung eines Silikonabdrucks, nicht mehr auftreten.

Die Aufgabe der Erfindung wird gelöst durch ein Belederungsmodell mit den Merkmalen des Patentanspruchs 1.

Vorteilhafte Ausgestaltungen und Weiterbildungen der Erfindung sind in den Unteransprüchen angegeben.

Das erfindungsgemäße Belederungsmodell ist im Wesentlichen aus einem Fräsmodell und einer darauf angebrachten Haut aufgebaut.

Das Fräsmodell weist wenigstens eine Nut mit Nutgrund auf. Die Haut besteht aus wenigstens einem ersten Zuschnitt und einem zweiten Zuschnitt. Die Haut weist eine Strukturseite und eine gegenüberliegende Rückseite auf, liegt mit der Rückseite zumindest außerhalb der Nut auf dem Fräsmodell auf und ist geeignet fixiert. Der erste Zuschnitt und der zweite Zuschnitt sind über zumindest eine Fügelinie unter Ausbildung eines ersten Positionierabschnittes und eines zweiten Positionierabschnittes verbunden. Der erste Positionierabschnitt erstreckt sich zwischen der Fügelinie und einer Stirnseite des ersten Zuschnittes und der zweite Positionierabschnitt zwischen der Fügelinie und einer Stirnseite des zweiten Zuschnittes. Die Positionierabschnitte sind mit der jeweiligen Stirnseite zu dem Nutgrund hinweisend in die Nut eingeführt und positionieren damit die Haut.

Erfindungsgemäß ist zumindest die Fügelinie dicht ausgeführt, so dass bei der Herstellung eines Silikonabdruckes kein Silikon durch die Fügelinie in den Bereich zwischen den beiden Positionierabschnitten eindringen kann. Hierzu sind die Positionierabschnitte unter Ausbildung einer Fügefläche im Wesentlichen vollständig miteinander verschweißt oder verklebt.

Dadurch können die Positionierabschnitte einander gegenüberliegend verbunden werden, wodurch die Positionierabschnitte im Bereich unmittelbar an der Fügelinie derart abdichtend aneinander gefügt sind, dass bei der Herstellung eines Silikonabdruckes kein Silikon durch die Fügelinie hindurch und den Bereich zwischen den beiden Positionierabschnitte eindringen kann. Die Fügelinie kann damit bei der Herstellung einer Formhaut auf das Silikonnegativ mit definierter Kontur abgebildet werden.

Die Haut des Belederungsmodells ist bevorzugt eine Folienhaut oder eine Kunstlederhaut. Derartige Häute können relativ einfach und kostengünstig mit einer Narbung ausgebildet werden, die eine natürliche Ledernarbung wirklichkeitsgetreu wiedergeben.

Erfindungsgemäß sind die Positionierabschnitte unter Ausbildung einer Fügefläche im Wesentlichen vollständig miteinander verschweißt oder verklebt. Damit können die Positionierabschnitte auch unterhalb der Fügelinie abdichtend aneinander liegen.

In einer Ausgestaltung der Erfindung ist die Fügelinie eine Schweißnaht oder eine Klebenaht. Hierdurch können kostengünstig die Zuschnitte dicht zusammengefügt und gleichzeitig eine hohe Fertigungsqualität sichergestellt werden.

In einer weiteren Ausgestaltung der Erfindung ist die Fügelinie eine textile Naht. Eine textile Naht stellt eine weitere Alternative einer Naht dar. Zur Herstellung der textilen Naht können an sich bekannte und übliche Garne oder Fäden verwendet werden. Durch eine textile Naht kann der Echtheitseindruck einer Lederhaut vorteilhafterweise erhöht werden.

Gemäß einer bevorzugten Ausgestaltung der Erfindung sind die Positionierabschnitte zur Ausbildung der Fügelinie mittels eines Fadens durch Nähen miteinander verbunden. Auch können die Positionierabschnitte unterhalb der Fügelinie durch zusätzliche Nähte abdichtend miteinander verbunden werden.

Gemäß einer Weiterentwicklung der Erfindung ist wenigstens ein Abdichtelement zwischen die Positionierabschnitte eingeführt, wobei die Positionierabschnitte zu dem Nutgrund hinweisend dichtend abgedeckt sind. Das Abdichtelement kann dabei die Positionierabschnitte umgreifen. Das zwischen die Positionierabschnitte eingeführte Abdichtelement kann bis an die Fügelinie heranreichen. Durch das Abdichtelement kann ein sich unterhalb der Fügelinie zwischen den Positionierabschnitten ggfs. vorhandener Spalt als mögliche Austrittsstelle für Silikon abgedichtet werden.

Vorteilhafterweise ist das Abdichtelement die Postionierabschnitte umgreifend nach oben hin aus einem Bereich der Nut heraus geführt, sodass die in die Nut eingeführten Positionierabschnitte nicht in Berührung mit Nutflanken kommen.

Gemäß einer Weiterbildung der Erfindung ist das Abdichtelement ein Band, vorzugsweise ein Textilband. Ein derartiges Abdichtelement ist besonders einfach herzustellen und zu verwenden.

In einer weiteren Ausgestaltung der Erfindung ist das Band zusammen mit dem ersten Zuschnitt und dem zweiten Zuschnitt vernäht. Damit können in einem einzelnen Arbeitsschritt die Zuschnitte zusammengefügt und ein Spalt zwischen den zusammengefügten Positionerabschnitten abgedeckt werden. Dies führt dann zu einer Verstärkung der Naht.

Gemäß einer bevorzugten Ausgestaltung der Erfindung ist das Band angeklebt oder angeschweißt. Ankleben oder Schweißen kann eine zweckmäßige Alternative zu Vernähen darstellen.

Vorzugsweise deckt das Band auch die Durchstichstellen des Fadens dichtend ab. Damit kann ein Silikonaustritt auch an den Durchstichstellen des Fadens vermindert werden.

In einer weiteren Ausgestaltung der Erfindung weist das Band wenigstens eine erste Erhebung bzw. eine Aufdickung auf. Eine deratige Erhebung ist dem Grunde nach in der DE 10 2012 100 891 A1 offenbart. Eine derartige Erhebung kann in einen Spalt zwischen den Positionierabschnitten eindringen, wenn das Band an die Positionierabschnitte angebracht wird, und den Spalt damit abdichten.

Vorteilhafterweise weist das Band eine Knickperforation im Bereich der ersten Erhebung auf. Durch eine derartige Knickperforation kann das Band besonders einfach verformt und damit leichter verarbeitet werden.

Vorzugsweise weist das Band wenigstens eine zweite Erhebung, die gegenüberliegend zu der ersten Erhebung angeordnet ist, auf. Mit einer derartigen zweiten Erhebung können die Positionierabschnitte in der Nut besonders sicher und präzise positioniert werden.

In einer alternativen Ausgestaltung der Erfindung ist das Abdichtelement ein Einleger, der als Extrusionsprofil, vorzugsweise als elastisches Extrusionsprofil, als Verklipsungselement, als Spritzgussteil, als ein durch Hitze aktivierbares Klebeband oder als Kombination der voran genannten Teile vorliegen kann. Ein derartiger Einleger führt zusätzlich zu einer besonders guten Nahtabdichtung.

Vorteilhafterweise ist an den Positionierabschnitten wenigstens ein Verstärkungselement, vorzugsweise ein Verklipsungselement, ein Nähfaden, eine Klebeschicht oder eine Kombination der vorstehend genannten Elemente angebracht, wobei durch das Verstärkungselement der Zusammenhalt der in die Nut eingeführten Positionierabschnitte zusätzlich verbessert ist. Zusätzlich zu der Abdichtfunktion kann damit der Zusammenhalt der Fügeflächen optimiert werden, sodass die Fügeflächen und die Fügelinie sicher ihre Funktionen erfüllen können. Derartige Verstärkungselemente können auch zusätzlich zu dem Abdichtelement verwendet werden.

Vorzugsweise sind die Positionierabschnitte durch einen Randbeschnitt auf eine Tiefe der Nut abgestimmt, sodass die Fügelinie besonders einfach und exakt an die Nutgeometrie angepasst werden kann.

In einer vorteilhaften Ausgestaltung der Erfindung ist das Fräsmodell ein mehrteiliges Fräsmodell, wobei eine Trennlinie benachbarter Einzelteile durch die wenigstens eine Nut verläuft. Üblicherweise werden mehrteilige Fräsmodelle nach Einlegen der Haut zusammengedrückt. Durch einen derartigen Druck werden mögliche Austrittsstellen von dem Material verbessert abgedichtet.

Die Erfindung wird anhand der nachfolgenden Figuren ausführlich erläutert. Es zeigen:
- Fig. 1: eine Seitenansicht eines Ausführungsbeispiels eines Belederungsmodells,
- Fig. 2: eine Detaildarstellung eines Ausführungsbeispiels einer Nut eines Belederungsmodells nach Figur 1 mit einem Ausführungsbeispiel eines angenähten Abdichtelements,
- Fig. 2a: ein Ausführungsbeispiel eines Bandes mit einem Ausführungsbeispiel einer Erhebung,
- Fig. 2b: ein Ausführungsbeispiel zweier Zuschnitte einer Haut eines Belederungsmodells nach Figur 1 mit einem Band und einer Erhebung nach Figur 2a unmittelbar vor dem Annähen des Bands an die Zuschnitte,
- Fig. 2c: zwei Zuschnitte nach Figur 2b mit einem Band und einer Erhebung nach Figur 2a nach dem Nähen des Bandes an die Zuschnitte,
- Fig. 2d: in die Nut eingeführte Haut nach dem Nähen gemäß Figur 2c,
- Fig. 3: eine Detaildarstellung eines Ausführungsbeispiels einer Nut eines Belederungsmodells nach Figur 1 mit einem Ausführungsbeispiel eines Verstärkungselements,
- Fig. 4a: eine Seitenansicht eines Ausführungsbeispiels eines zweiteiligen Belederungsmodells vor dem Zusammenbau,
- Fig. 4b: Belederungsmodell nach Figur 4a bei verringertem Spaltabstand,
- Fig. 5a: ein Ausführungsbeispiel eines Bands mit einem weiteren Ausführungsbeispiel einer Erhebung,
- Fig. 5b: ein Ausführungsbeispiel eines Bands mit einer Perforation und einer Erhebung nach Figur 5a,
- Fig. 5c: ein Band nach Figur 5a mit einem weiteren Ausführungsbeispiel einer Erhebung,
- Fig. 5d: ein Band nach Figur 2a mit einem Ausführungsbeispiel einer zusätzlichen Erhebung,
- Fig. 5e: ein Band nach Figur 5d mit einem weiteren Ausführungsbeispiel einer zusätzlichen Erhebung,
- Fig. 6a: ein Ausführungsbeispiel zusammengefügter Positionierabschnitte in einem Ausgangszustand,
- Fig. 6b: ein Ausführungsbeispiel von Positionierabschnitten nach Figur 6a nach Zusammennähen und Randbeschnitt,
- Fig. 6c: in die Nut nach Figur 2 eingeführte Positionierabschnitte nach Figur 6b,
- Fig. 7a: Positionierabschnitte nach Figur 6b ohne Zusammennähen, und
- Fig. 7b: in die Nut nach Figur 2 eingeführte Positionierabschnitte nach Figur 7a.

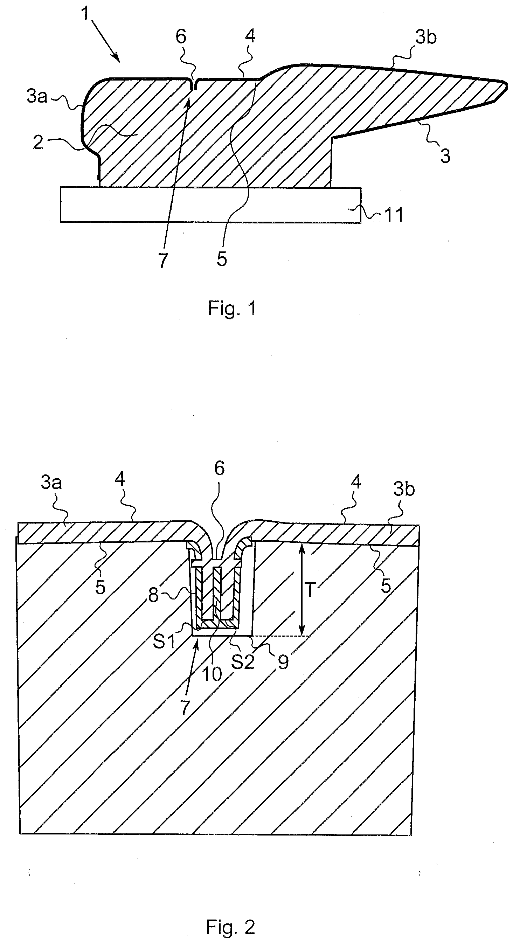

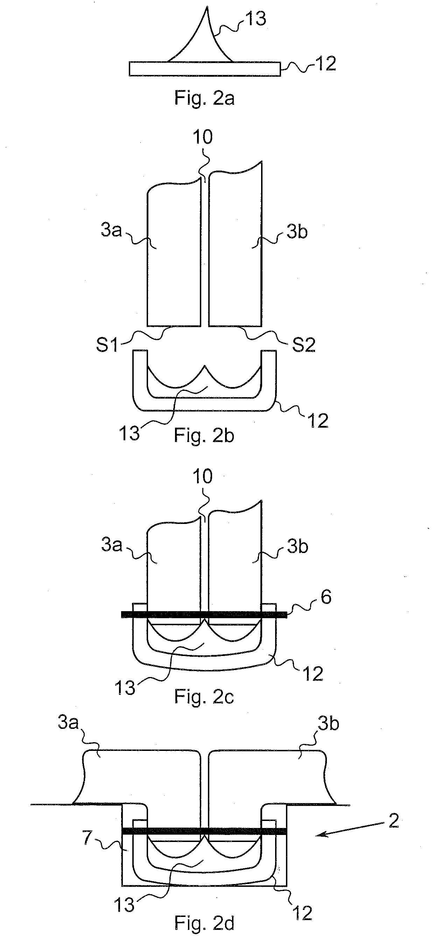

Die Figur 1 zeigt ein Belederungsmodell 1 mit einem Fräsmodell 2 und einem Grundträger 11, wobei auf das Fräsmodell 2 eine Haut 3 aufgebracht ist. Das Fräsmodell 2 weist eine Nut 7 mit einem Nutgrund 9 auf, s. auch Figur 2.

Das Fräsmodell 2 bildet an seiner Oberfläche die Form eines Innenverkleidungsteils ab, beispielsweise die Form einer Türverkleidung oder eines Innentürbereichs, z.B. einer Armauflage oder Brüstung.

Die Haut 3 kann die Narbung einer natürlichen Lederhaut wirklichkeitsgetreu abbilden, sodass eine Strukturseite 4 der Haut 3 und damit eine Oberfläche des Silikonabdruckes den Eindruck echten Leders hervorrufen. Die Haut 3 liegt mit einer der Strukturseite 4 gegenüberliegenden Rückseite 5 auf dem Fräsmodell 2 zumindest außerhalb der Nut 7 auf und ist geeignet fixiert.

Vorliegend besteht die Haut 3 aus einem ersten Zuschnitt 3a und einen zweiten Zuschnitt 3b, die über zumindest eine Fügelinie L verbunden sind, s. auch Figur 2. Der erste Zuschnitt 3a weist einen Positionierabschnitt A1 auf, der sich zwischen der Fügelinie L und einer Stirnseite S1 des ersten Zuschnittes 3a erstreckt. Der zweite Zuschnitt 3b weist einen Positionierabschnitt A2 auf, der sich zwischen der Fügelinie L und einer Stirnseite S2 des zweiten Zuschnittes 3b erstreckt. Eine Länge des Positionierabschnittes A1 und eine Länge des Positionierabschnittes A2 sind derart bemessen, dass die Positionierabschnitt A1, A2 mit der jeweiligen Stirnseite S1, S2 zu dem Nutgrund 9 hinweisend in die Nut 7 eingeführt werden können.

Die beiden Zuschnitte 3a und 3b sind unter Ausbildung der Fügelinie L verbunden, wie beispielsweise die Figuren 2, 3, 6c, 7b zeigen.

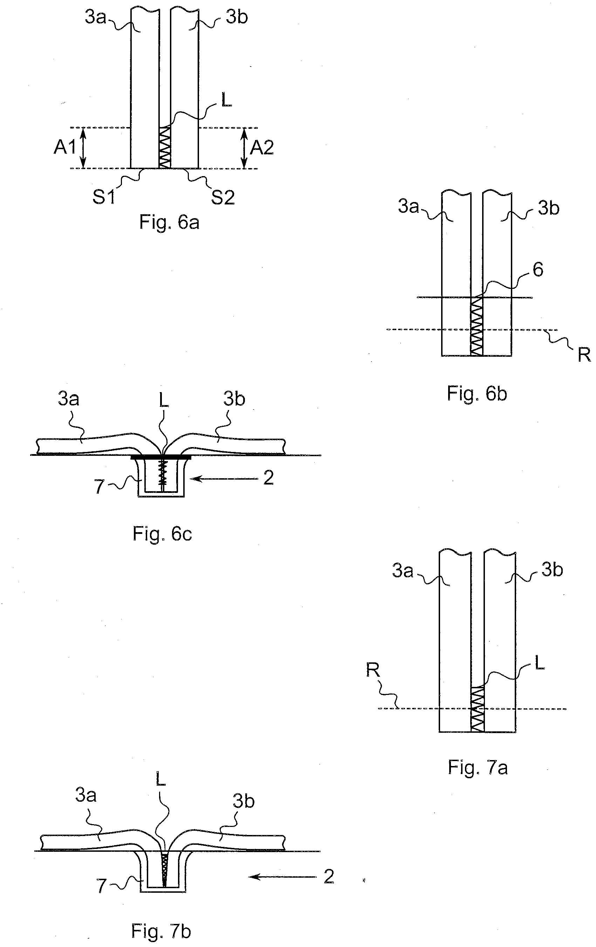

Figur 2 zeigt die Zuschnitte 3a und 3b, die nach einem textilen Fügeverfahren zusammengefügt sind. Beispielsweise sind die Zuschnitte 3a und 3b mit einem Faden 6 vernäht. Der Faden 6 bzw. eine aus dem Nähen resultierende Naht ist ein Beispiel für eine Fügelinie L, wie beispielsweise in Figur 6a gezeigt. Die Fügelinie L ist eine sichtbare Begrenzung von Fügeflächen F, an denen die Positionierabschnitte A1, A2 einander gegenüberliegend miteinander verbunden sind. Die Strukturseiten 4 unterhalb der Fügelinie L sind nicht sichtbar.

Zwischen den in die Nut 7 eingeführten Positionierabschnitten A1, A2 kann ein Spalt 10 vorhanden sein, wenn die Zuschnitte 3a, 3b miteinander vernäht sind, wie in Figur 2 dargestellt.

Figur 2 zeigt ein Abdichtelement 8, das den Spalt 10 dichtend abdeckt. Das Abdichtelement 8 ist beispielsweise zusammen mit den Zuschnitten 3a und 3b vernäht. Das Abdichtelement 8 deckt in Figur 2 die Rückseiten 5 der Positionierabschnitte A1, A2 dichtend ab, wobei der Faden 6 das Abdichtelement 8 durchsticht.

Alternativ kann das Abdichtelement 8 auf die Rückseiten 5 der Positionierabschnitte A1 und A2 jeweils auch angeklebt, angeklippst oder in einer sonstigen Weise angeordnet sein.

Das Abdichtelement 8 kann in Form eines Bands 12 oder eines Einlegers vorliegen.

Die Figuren 2a bis 2c zeigen, wie das Abdichtelement 8 in Form eines Bandes 12 mit den Zuschnitten 3a und 3b zusammengefügt wird. Die Figur 2d zeigt, wie das Band 12 mit den Zuschnitten 3a und 3b in die Nut 7 eingeführt ist.

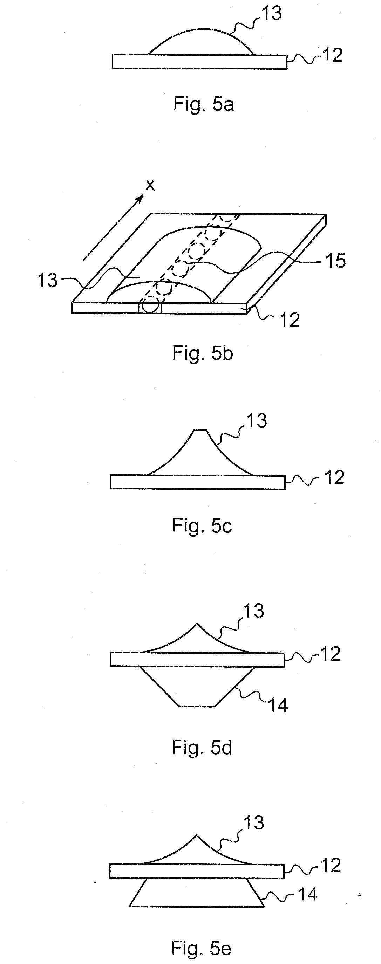

Figur 2a ist eine Seitenansicht eines Bands 12 mit wenigstens einer ersten Erhebung 13 und zeigt das Band 12 mit der wenigsten einer ersten Erhebung 13 in einem Ausgangszustand. Die erste Erhebung 13 kann nach Figur 2a im Wesentlichen als Seitenfläche eine dreieckähnliche Fläche aufweisen. Es sind aber auch andere Formen für die erste Erhebung 13 denkbar. Beispielsweise zeigt Figur 5a eine erste Erhebung 13 mit einer halbkreisförmigen Seitenfläche. Figur 5c zeigt das Beispiel einer ersten Erhebung 13 mit einer trapezförmigen Seitenfläche. Die erste Erhebung 13 kann an das Band 12 aufgenäht, angeklebt, angeschweißt oder in einer sonstigen Art und Weise befestigt sein.

Die erste Erhebung 13 kann aus einem verformbaren Material bestehen.

Das Band 12 kann mit der angeordneten ersten Erhebung 13 U-förmig verformt werden, um die Positionierabschnitte A1, A2 mit den Schenkeln eines U klammerartig an deren Rückseiten 5 zu umgreifen, wobei die erste Erhebung 13 in den Spalt 10 zwischen den einander gegenüberliegenden Sichtseiten 4 eindringt und diesen abdichtet, vgl. Figuren 2b, 2c. Das Band 12 kann dabei die Form einer Lippe aufweisen.

Um das Band 12 bei der Herstellung einer U-Form möglichst einfach zu verformen und damit ein leichter zu verarbeitendes Band 12 bereitzustellen, kann das Band 12 mittig in einer Längsrichtung x im Bereich der ersten Erhebung 13 eine Knickperforation 15 aufweisen, wie in Figur 5b gezeigt.

Die Figur 2b zeigt die Positionierabschnitte A1, A2 mit dem Band 12 und der ersten Erhebung 13 unmittelbar vor dem Nähen.

Die Figur 2c zeigt das Band 12, das beim Vernähen der Zuschnitte 3a und 3b mitvernäht wurde. Die erste Erhebung 13 ist dabei in den Spalt 10 eingesetzt.

Zur verbesserten Positionierung in der Nut 7 kann das Band 12 wenigstens eine zweite Erhebung 14 aufweisen, die an einer der Seite des Bandes 12 mit der ersten Erhebung 13 gegenüberliegenden Seite angeordnet sein kann. Die zweite Erhebung 14 kann analog zu der ersten Erhebung 13 an dem Band 12 befestigt sein. Die Form der zweiten Erhebung 14 kann hierbei an die Form der die zweite Erhebung aufzunehmenden Nut 7 optimal angepasst sein.

Die Figur 5d zeigt eine Seitenansicht eines Bands 12 mit einer ersten Erhebung 13 und einer zweiten Erhebung 14. Die zweite Erhebung 14 hat beispielsweise die Seitenfläche eines Trapezes.

Die Figur 5e zeigt eine Seitenansicht eines Bandes 12 mit einer ersten Erhebung 13 und einer zweiten Erhebung 14, wobei die Erhebung 14 eine andere Form als die in Figur 5d aufweist.

Durch das Zusammenfügen wird erreicht, dass die Strukturseiten 4 in den zusammengefügten Bereichen der Positionierabschnitte A1, A2 abdichtend einander gegenüberliegen. Eine Abdichtfunktion kann auch bei miteinander vernähten Strukturseiten 4 durch den Einsatz eines Bandes 12 erreicht werden. Insbesondere kann ein Band 12 Durchstichstellen des Fadens 6 abdichten.

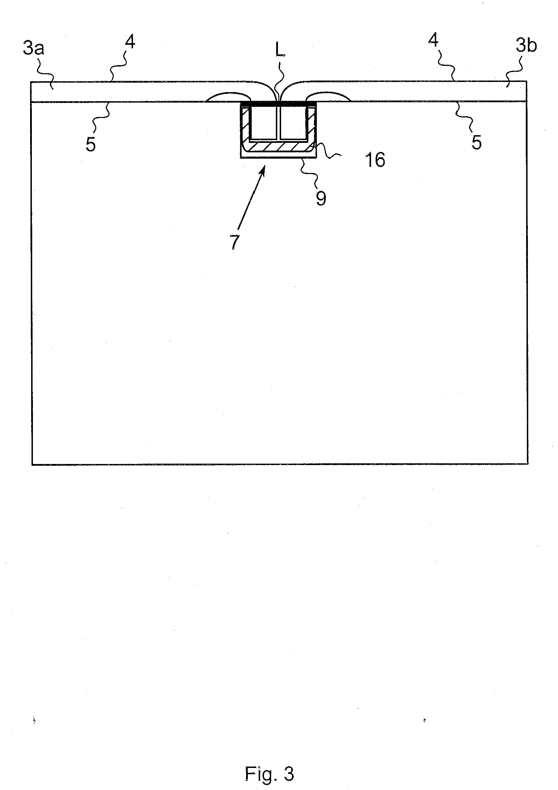

Neben einer erfindungsgemäßen Abdichtfunktion kann auch eine Verstärkungsfunktion bereitgestellt werden. Beispielsweise zeigt die Figur 3 ein Verstärkungselement 16, das nach Zusammenfügen der Zuschnitte 3a und 3b an die Rückseiten 5 angeklebt ist und beispielsweise die Stirnseiten S1, S2 überdeckt. Das Verstärkungselement 16 kann auch ein Nähfaden sein.

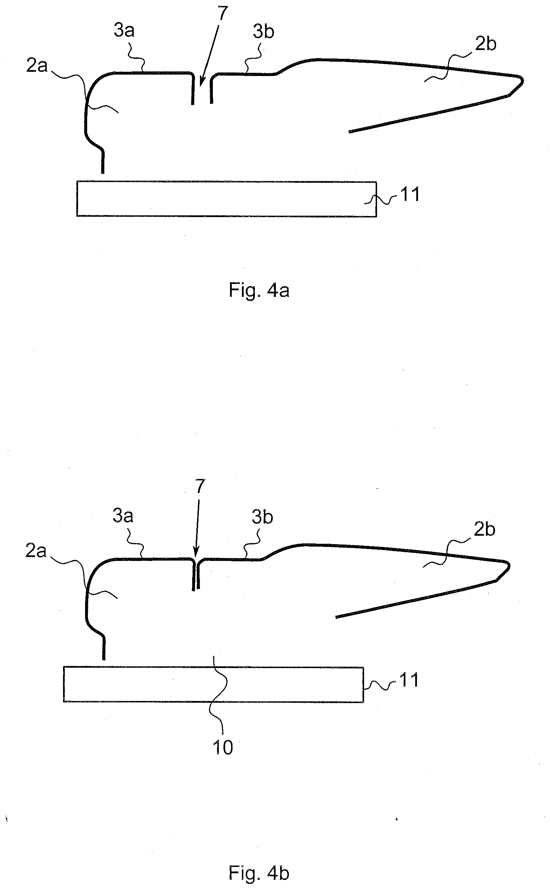

Die Figur 4a zeigt ein Fräsmodell 2, das aus einem ersten Einzelteil 2a und einem zweiten Einzelteil 2b besteht und auf einem Grundträger 11 angeordnet ist. Auf beiden Einzelteilen 2a und 2b sind jeweils Häute 3 aufgebracht. Die beiden Einzelteile 2a und 2b sind unter Ausbildung eines Spaltes 10 noch beabstandet.

Die Figur 4b zeigt die Einzelteile 2a und 2b des mehrteiligen Fräsmodells 2 der Figur 4a, wobei der Spaltabstand im Vergleich zu Figur 4a verringert wurde, sodass die beiden Einzelteile 2a und 2b aneinander gepresst werden können.

Die Figuren 6a, 6b, 6c zeigen die Verfahrensschritte beim Einführen von den Zuschnitten 3a und 3b in die Nut 2 des Fräsmodells 2. Die Figur 6a zeigt einen ersten Verfahrensschritt, in dem die Positionierabschnitte A1, A2 abdichtend zusammengefügt, beispielsweise geklebt oder geschweißt, werden unter Ausbildung einer entsprechenden Fügelinie L in der Form einer Klebenaht oder Schweißnaht. Die derart zusammengefügten Positionierabschnitte A1, A2 können in einem zweiten Schritt zusätzlich mittels eines Fadens 6 als Verstärkungselement 16 in ihrem Zusammenhalt verstärkt werden. Optional kann ein Randbeschnitt R erfolgen, wie in Figur 6b dargestellt. Durch den Randbeschnitt R können die Positionierabschnitte A1, A2 an eine Tiefe T der Nut angepasst werden. Anschließend werden die derart zusammengefügten Positionierabschnitte A1, A2 in die Nut 7 eingeführt.

Die Figuren 7a, 7b zeigen ein Verfahren ähnlich zu dem in den Figuren 6a, 6b, 6c dargestellten Verfahren, allerdings ohne Nähprozess. Die an der Fügelinie L zusammengefügten Positionierabschnitte A1, A2 werden dann ohne eine Naht in die Nut 7 eingeführt.

### Bezugszeichenliste

- 1: Belederungsmodell
- 2: Fräsmodell
- 2a: Einzelteil
- 2b: Einzelteil

- 3: Haut
- 3a: Zuschnitt
- 3b: Zuschnitt
- 4: Strukturseite
- 5: Rückseite

- 6: Faden
- 7: Nut
- 8: Abdichtelement
- 9: Nutgrund
- T: Tiefe

- 10: Spalt
- 11: Grundträger

- 12: Band
- 13: Erhebung
- 14: Erhebung
- 15: Knickperforation

- 16: Verstärkungselement

- A1: Positionierabschnitt
- A2: Positionierabschnitt

- L: Fügelinie
- F: Fügefläche
- R: Randbeschnitt

- S1: Stirnseite
- S2: Stirnseite

- x: Längsrichtung

## Patentansprüche

1. Belederungsmodell (1) zum Herstellen eines Silikonabdrucks, aufweisend
- ein Fräsmodell (2), das wenigstens eine Nut (7) mit einem Nutgrund (9) aufweist,
- eine Haut (3), die an dem Fräsmodell (2) angeordnet ist und aus wenigstens einem ersten Zuschnitt (3a) und einem zweiten Zuschnitt (3b) aufgebaut ist, wobei die Haut (3)
- eine Strukturseite (4) und eine gegenüberliegende Rückseite (5) aufweist und die Haut (3) mit der Rückseite (5) zumindest außerhalb der Nut (7) auf dem Fräsmodell (2) aufliegt und geeignet fixiert ist
- wobei der erste Zuschnitt (3a) und der zweite Zuschnitt (3b) über zumindest eine Fügelinie (L) unter Ausbildung eines ersten Positionierabschnitts (A1) und eines zweiten Positionierabschnitts (A2) verbunden sind,
- wobei der erste Positionierabschnitt (A1) zwischen der Fügelinie (L) und einer Stirnseite (S1) des ersten Zuschnitts (3a) und der zweite Positionierabschnitt (A2) zwischen der Fügelinie (L) und einer Stirnseite (S2) des zweiten Zuschnitts (3b) angeordnet ist,
- wobei die Positionierabschnitte (A1, A2) mit der jeweiligen Stirnseite (S1, S2) zu dem Nutgrund (9) hinweisend in die Nut (7) eingeführt sind,
**dadurch gekennzeichnet, dass**
- zumindest die Fügelinie (L) dicht ausgeführt ist, so dass bei der Herstellung eines Silikonabdruckes kein Silikon durch die Fügelinie (L) in den Bereich zwischen den beiden Positionierabschnitte (A1, A2) eindringen kann, wobei
- die Positionierabschnitte (A1, A2) unter Ausbildung einer Fügefläche (F) im Wesentlichen vollständig miteinander verschweißt oder verklebt sind.

2. Belederungsmodell (1) nach Anspruch 1,
**dadurch gekennzeichnet, dass**
die Fügelinie (L) eine Schweißnaht oder eine Klebenaht ist.

3. Belederungsmodell (1) nach Anspruch 1,
**dadurch gekennzeichnet, dass**
die Fügelinie (L) eine textile Naht ist.

4. Belederungsmodell (1) nach Anspruch 3,
**dadurch gekennzeichnet, dass**
die Positionierabschnitte (A1, A2) mittels eines Fadens (6) durch Nähen miteinander verbunden sind.

5. Belederungsmodell (1) nach Anspruch 4,
**dadurch gekennzeichnet, dass**
wenigstens ein Abdichtelement (8) zwischen die Positionierabschnitte (A1, A2) eingeführt ist, wobei die Positionierabschnitte (A1, A2) zu dem Nutgrund (9) hinweisend dichtend abgedeckt sind.

6. Belederungsmodell (1) nach Anspruch 5,
**dadurch gekennzeichnet, dass**
das Abdichtelement (8) aus einem Bereich der Nut (7) heraus geführt ist.

7. Belederungsmodell (1) nach einem der Ansprüche 5 oder 6,
**dadurch gekennzeichnet, dass**
das Abdichtelement (8) ein Band (12), vorzugsweise ein Textilband, ist.

8. Belederungsmodell (1) nach Anspruch 7,
**dadurch gekennzeichnet, dass**
das Band (12) zusammen mit dem ersten Zuschnitt (3a) und dem zweiten Zuschnitt (3b) vernäht ist.

9. Belederungsmodell (1) nach einem der Ansprüche 7 oder 8,
**dadurch gekennzeichnet, dass**
das Band (12) angeklebt oder angeschweißt ist.

10. Belederungsmodell (1) nach Anspruch 7 und 9,
**dadurch gekennzeichnet, dass**
das Band (12) Durchstichstellen des Fadens (6) dichtend abdeckt.

11. Belederungsmodell (1) nach einem der Ansprüche 7 bis 10,
**dadurch gekennzeichnet, dass**
das Band (12) wenigstens eine erste Erhebung (13) aufweist.

12. Belederungsmodell (1) nach Anspruch 11,
**dadurch gekennzeichnet, dass**
das Band (12) eine Knickperforation (15), bevorzugt im Bereich der ersten Erhebung (13), aufweist.

13. Belederungsmodell (1) nach einem der Ansprüche 11 oder 12,
**dadurch gekennzeichnet, dass**
das Band (12) wenigstens eine zweite Erhebung (14), die gegenüberliegend zu der ersten Erhebung (13) angeordnet ist, aufweist.

14. Belederungsmodell (1) nach einem der Ansprüche 5 oder 6,
**dadurch gekennzeichnet, dass**
das Abdichtelement (8) ein Einleger ist, der als Extrusionsprofil, vorzugsweise als elastisches Extrusionsprofil, als Verklipsungselement, als Spritzgussteil, als ein durch Hitze aktivierbares Klebeband oder als Kombination der vorstehend genannten Teile vorliegt.

15. Belederungsmodell (1) nach einem der vorhergehenden Ansprüche,
**dadurch gekennzeichnet, dass**
an den Positionierabschnitten (A1, A2) wenigstens ein Verstärkungselement (16), vorzugsweise ein Verklipsungselement, ein Nähfaden, eine Klebeschicht oder eine Kombination der vorstehend genannten Verstärkungselemente (16), angebracht ist.

16. Belederungsmodell (1) nach einem der vorhergehenden Ansprüche,
**dadurch gekennzeichnet, dass**
die Positionierabschnitte (A1, A2) durch einen Randbeschnitt (R) auf eine Tiefe (T) der Nut (7) abgestimmt sind.

## Claims

1. Leather trim model (1) for producing a silicone impression, comprising
- a milling model (2) which has at least one groove (7) with a groove base (9),
- a skin (3) which is arranged on the milling model (2) and is formed from at least one first cut (3a) and one second cut (3b), wherein the skin (3)
- has a structured side (4) and an opposing rear side (5) and the skin (3) rests and is suitably fixed with the rear side (5) at least outside the groove (7) on the milling model (2),
- wherein the first cut (3a) and the second cut (3b) are connected via at least one joint line (L) forming a first positioning section (A1) and a second positioning section (A2),
- wherein the first positioning section (A1) is arranged between the joint line (L) and a front end (S1) of the first cut (3a) and the second positioning section (A2) is arranged between the joint line (L) and a front end (S2) of the second cut (3b),
- wherein the positioning sections (A1, A2) are inserted into the groove (7) with the respective front end (S1, S2) directed towards the groove base (9),
**characterised in that**:
- the joint line (L) is tightly sealed, so that during the production of a silicone impression no silicone can penetrate through the joint line (L) into the region between the two positioning sections (A1, A2), wherein
- the positioning sections (A1, A2) are substantially completely welded or glued to one another, forming a joint surface (F).

2. Leather trim model (1) according to claim 1, **characterised in that** the joint line (L) is a welded seam or a glued seam.

3. Leather trim model (1) according to claim 1, **characterised in that** the joint line (L) is a textile seam.

4. Leather trim model (1) according to claim 3, **characterised in that** the positioning sections (A1, A2) are connected to one another by sewing by means of a thread (6).

5. Leather trim model (1) according to claim 4, **characterised in that** at least one sealing element (8) is introduced between the positioning sections (A1, A2), wherein the positioning sections (A1, A2) are covered in a sealing manner towards the groove base (9).

6. Leather trim model (1) according to claim 5, **characterised in that** the sealing element (8) projects out of a region of the groove (7).

7. Leather trim model (1) according to any one of claims 5 or 6, **characterised in that** the sealing element (8) is a band (12), preferably a textile band.

8. Leather trim model (1) according to claim 7, **characterised in that** the band (12) is sewn together with the first cut (3a) and the second cut (3b).

9. Leather trim model (1) according to one of claims 7 or 8, **characterised in that** the band (12) is glued on or welded on.

10. Leather trim model (1) according to claims 7 and 9, **characterised in that** the band (12) covers puncture points of the thread (6) in a sealing manner.

11. Leather trim model (1) according to any one of claims 7 to 10, **characterised in that** the band (12) has at least one first protrusion (13).

12. Leather trim model (1) according to claim 11, **characterised in that** the band (12) has a crease perforation (15), preferably in the region of the first protrusion (13).

13. Leather trim model (1) according to any one of claims 11 or 12, **characterised in that** the band (12) has at least one second protrusion (14) which is arranged opposite the first protrusion (13).

14. Leather trim model (1) according to any one of claims 5 or 6, **characterised in that** the sealing element (8) is an insert which is present as an extrusion profile, preferably an elastic extrusion profile, a clip-on element, an injection moulded part, a heat-activatable adhesive band, or as a combination of the aforementioned parts.

15. Leather trim model (1) according to any one of the preceding claims, **characterised in that** at least one reinforcing element (16), preferably a clip-on element, a sewing thread, an adhesive layer, or a combination of the aforementioned reinforcing elements (16), is attached to the positioning sections (A1, A2).

16. Leather trim model (1) according to any one of the preceding claims, **characterised in that** the positioning sections (A1, A2) are adapted to a depth (T) of the groove (7) by an edge trim (R).

## Revendications

1. Modèle de garnissage de cuir (1) destiné à l'obtention d'une empreinte en silicone comprenant :
- un modèle de fraisage (2) qui comporte au moins une rainure (7) ayant un fond de rainure (9),
- une peau (3) qui est située sur le modèle de fraisage (2) et est constituée d'au moins un premier flan (3a) et un second flan (3b), la peau (3), ayant une face structurée (4) et une face arrière (5) opposée à celle-ci et s'appliquant et étant fixée de manière adaptée par sa face arrière (5) au moins à l'extérieur de la rainure (7) sur le modèle de fraisage (2),
- le premier flan (3a) et le second flan (3b) étant reliés par l'intermédiaire d'au moins une ligne de jointure (L) en formant un premier segment de positionnement (A1) et un second segment de positionnement (A2),
- le premier segment de positionnement (A1) est situé entre la ligne de jointure (L) et une face frontale (S1) du premier flan (3a) et le second segment de positionnement (A2) est situé entre la ligne de jointure (L) et une face frontale (S2) du second flan (3b),
- les segments de positionnement (A1, A2) sont introduits dans la rainure (7) par leur face frontale (S1, S2) respective en étant dirigés vers le fond (9) de cette rainure,
**caractérisé en ce qu'**
- au moins la ligne de jointure (L) est réalisée de façon étanche de sorte que, lors de la fabrication d'une empreinte en silicone, le silicone ne puisse pas pénétrer au travers de la ligne de jointure (L) dans la zone située entre les deux segments de positionnement (A1, A2),
- les segments de positionnement (A1, A2) sont essentiellement totalement soudés ou collés l'un à l'autre en formant une surface de jointure (F).

2. Modèle de garnissage de cuir (1) conforme à la revendication 1,
**caractérisé en ce que**
la ligne de jointure (L) est un joint de soudure ou un joint de colle.

3. Modèle de garnissage de cuir (1) conforme à la revendication 1,
**caractérisé en ce que**
la ligne de jointure (L) est une jointure textile.

4. Modèle de garnissage de cuir (1) conforme à la revendication 3,
**caractérisé en ce que**
les segments de positionnement (A1, A2) sont reliés l'un à l'autre par couture au moyen d'un fil (6).

5. Modèle de garnissage de cuir (1) conforme à la revendication 4,
**caractérisé en ce qu'**
au moins un élément d'étanchéité (8) est inséré entre les segments de positionnement (A1, A2), ces segments de positionnement (A1, A2) étant recouverts de façon étanche en étant dirigés vers le fond de la rainure (9).

6. Modèle de garnissage de cuir (1) conforme à la revendication 5,
**caractérisé en ce que**
l'élément d'étanchéité (8) sort de la zone de la rainure (7).

7. Modèle de garnissage en cuir (1) conforme à l'une des revendications 5 et 6,
**caractérisé en ce que**
l'élément d'étanchéité (8) est une bande (12), de préférence une bande textile.

8. Modèle de garnissage en cuir (1) conforme à la revendication 7,
**caractérisé en ce que**
la bande (12) est cousue avec le premier flan (3a) et le second flan (3b).

9. Modèle de garnissage en cuir (1) conforme à l'une des revendications 7 et 8,
**caractérisé en ce que**
la bande (12) est collée ou soudée.

10. Modèle de garnissage en cuir (1) conforme aux revendications 7 et 9,
**caractérisé en ce que**
la bande (12) recouvre de façon étanche les points de piqûre du fil (6).

11. Modèle de garnissage en cuir (1) conforme à l'une des revendications 7 à 10,
**caractérisé en ce que**
la bande (12) comporte au moins un premier bossage (13).

12. Modèle de garnissage en cuir (1) conforme à la revendication 11,
**caractérisé en ce que**
la bande (12) comporte une perforation de pliage (15) de préférence dans la zone du premier bossage (13).

13. Modèle de garnissage en cuir (1) conforme à l'une des revendications 11 et 12,
**caractérisé en ce que**
la bande (12) comporte au moins un second bossage (14) qui est situé à l'opposé du premier bossage (13).

14. Modèle de garnissage de cuir (1) conforme à l'une des revendications 5 et 6,
**caractérisé en ce que**
l'élément d'étanchéité (8) est un insert qui se présente sous la forme d'un profilé d'extrusion, de préférence d'un profilé d'extrusion élastique, d'un élément d'enclipsage, d'une pièce moulée par injection, d'une bande de colle pouvant être activée par la chaleur ou d'une combinaison de tels éléments.

15. Modèle de garnissage en cuir (1) conforme à l'une des revendications précédentes,
**caractérisé en ce que**
sur les segments de positionnement (A1, A2) est appliqué au moins un élément de renfort (16), de préférence un élément d'enclipsage, un fil de couture, une couche de colle ou une combinaison de tels éléments de renfort (16).

16. Modèle de garnissage en cuir (1) conforme à l'une des revendications précédentes,
**caractérisé en ce que**
les segments de positionnement (A1, A2) sont adaptés par une coupure de bord (R) à la profondeur (T) de la rainure (7).
